# EUROPEAN PATENT APPLICATION

(11) **EP 4 826 053 A1**
(43) Date of publication of application: **21.10.2026**
(21) Application number: 24904132.8
(22) Date of filing: 02.12.2024
(51) Int. Cl.: C22C 38/04, C22C 38/14, C22C 38/00, C22C 38/02, C21D 8/02, C21D 9/46, C23C 2/06, C23C 2/12, C25D 3/22

(54) **HOT-ROLLED STEEL SHEET AND HOT-ROLLED PLATED STEEL SHEET WITH HIGH-STRENGTH, AND METHOD OF MANUFACTURING SAME**

(30) Priority: 15.12.2023 KR 20230183247
(71) Applicant: POSCO Co., Ltd, Gyeongsangbuk-do 37859 (KR)
(72) Inventor: LEE, Byounggab, Pohang-si Gyeongsangbuk-do 37859 (KR); KIM, Hanhwi, Pohang-si Gyeongsangbuk-do 37859 (KR)
(74) Representative: Meissner Bolte Partnerschaft mbB
(86) International application number: PCT/KR2024/019480
(87) International publication number: WO 2025/127567

(57) **Abstract**

Disclosed are hot-rolled steel sheet and hot-rolled plated steel sheet with high-strength, and a manufacturing method thereof, the hot-rolled steel sheet and hot-rolled plated steel sheet being high strength to be suitable as material for high-strength structural supports, and allowing reduction in the rolling load of hot-rolling finish.
A hot-rolled steel sheet according to the present invention contains, in wt%, 0.03-0.1% of C, 0.1% or less of Si, 0.8-1.4% of Mn, 0.03-0.08% of Ti, 0.02% or less of P, 0.02% or less of S, and 0.01% or less of N, with the remainder comprising Fe and inevitable impurities, and satisfies relational expression 1. Relational expression 1: 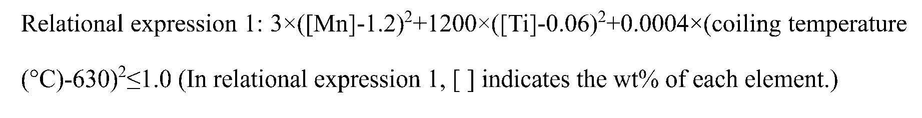 3×([Mn]-1.2)2+1200×([Ti]-0.06)2+0.0004×(coiling temperature (°C)-630)2≤1.0 (In relational expression 1, [ ] indicates the wt% of each element.)

## Description

### [Technical Field]

The present invention relates to a high-strength hot-rolled steel sheet, a high-strength hot-rolled plated steel sheet, and a method of manufacturing the same, which have high strength suitable for use as a structural material for high-strength support and are capable of reducing a finish hot rolling load.

### [Background Art]

High-strength hot-rolled steel sheets and hot-rolled plated steel sheets are primarily used as structural materials for support.

In particular, the high-strength hot-rolled plated steel sheets possess excellent deformation resistance and corrosion resistance and offer superior economic efficiency compared to cold-rolled plated steel sheets and are thus widely used as structural materials for steel construction, such as for construction scaffolding, a structural material for a greenhouse, and solar panel supports.

In the case of steel used for solar structure applications, demand for variable support structures that track the sun by moving vertically and horizontally, rather than fixed structures, has been rapidly increasing in order to maximize power generation relative to installation cost, and thus, market demand for high-strength steel materials is increasing.

Meanwhile, finish hot rolling is a final hot rolling process in which pressure is applied to a steel sheet to adjust it to a thickness required by customers, and it is important to manufacture the sheet such that thicknesses at a central portion and both edge portions are uniform. The intrinsic high-temperature deformation resistance characteristics of a material have a significant effect on a finish hot rolling load, and the rolling load in turn has a significant influence on dimensional and shape quality of a product. In general, as the strength of steel increases, the rolling load also increases, and a high rolling load may cause a decrease in productivity due to frequent replacement of rolling rolls and defects in surface shape.

Accordingly, there is an urgent need to develop a hot-rolled steel sheet and a hot-rolled plated steel sheet that have high strength suitable for use as structural materials for support, reduce a finish hot rolling load, and improve productivity.

### [Disclosure]

### [Technical Problem]

The present invention is directed to providing a high-strength hot-rolled steel sheet, a high-strength hot-rolled plated steel sheet, and a method of manufacturing the same, which have high strength suitable for use as a structural material for high-strength support and are capable of reducing a finish hot rolling load.

The present invention is also directed to providing a high-strength hot-rolled steel sheet, a high-strength hot-rolled plated steel sheet, and a method of manufacturing the same, which have excellent yield strength, tensile strength, and elongation.

Objects of the present invention are not limited to the above object, and other objects and advantages of the present invention which are not mentioned can be understood by the following description and more clearly understood by various embodiments of the present invention. In addition, it will be able to be easily seen that the objects and advantages of the present invention may be achieved by devices and combinations thereof that are described in the claims.

### [Technical Solution]

According to the present invention, there is provided a hot-rolled steel sheet including 0.03 to 0.1 wt% of C, 0.1 wt% or less of Si, 0.8 to 1.4 wt% of Mn, 0.03 to 0.08 wt% of Ti, 0.02 wt% or less of P, 0.02 wt% or less of S, 0.01 wt% or less of N, and the balance Fe and inevitable impurities, and satisfies Relational expression 1. Relational expression 1: 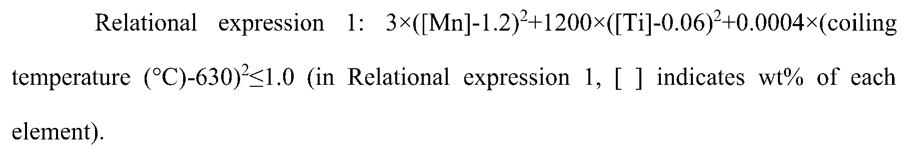 3×([Mn]-1.2)2+1200×([Ti]-0.06)2+0.0004×(coiling temperature (°C)-630)2≤1.0 (in Relational expression 1, [ ] indicates wt% of each element).

The hot-rolled steel sheet may include 90% or more of ferrite and the balance of one or more of pearlite, bainite, and martensite, based on a total area of 100%.

An average grain size of ferrite grains may be 15 µm or less.

The hot-rolled steel sheet may include carbide, wherein an average size of the carbides may be 8 nm or less, and the number of carbides may be 4.0 or more per 10,000 nm².

A yield strength may be 450 MPa or more, a tensile strength may be 540 MPa or more, and an elongation may be 16% or more.

According to another embodiment of the present invention, there is provided a hot-rolled steel sheet including 0.03 to 0.1 wt% of C, 0.1 wt% or less of Si, 0.8 to 1.4 wt% of Mn, 0.03 to 0.08 wt% of Ti, 0.02 wt% or less of P, 0.02 wt% or less of S, 0.01 wt% or less of N, and the balance Fe and inevitable impurities.

The hot-rolled plated steel sheet according to the present invention may include a base steel sheet, and a plating layer disposed on at least one surface of the base steel sheet, wherein the base steel sheet may include the hot-rolled steel sheet.

The plating layer may include any one of zinc, aluminum, a zinc alloy, and an aluminum alloy.

A method of manufacturing a hot-rolled steel sheet according to the present invention includes (a) reheating a steel slab including C: 0.03 to 0.1 wt%, Si: 0.1 wt% or less, Mn: 0.8 to 1.4 wt%, Ti: 0.03 to 0.08 wt%, P: 0.02 wt% or less, S: 0.02 wt% or less, N: 0.01 wt% or less, and the balance Fe and other inevitable impurities, (b) hot-rolling the steel slab, and (c) cooling and coiling the hot-rolled steel sheet, wherein the hot-rolled steel sheet satisfies Relational expression 1 below. Relational expression 1: 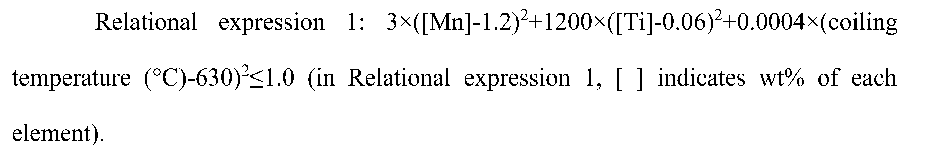 3×([Mn]-1.2)2+1200×([Ti]-0.06)2+0.0004×(coiling temperature (°C)-630)2≤1.0 (in Relational expression 1, [ ] indicates wt% of each element).

In operation (a), the steel slab may be reheated at 1150 to 1300 °C.

In operation (b), the steel slab may be hot-rolled at a finish delivery temperature of 800 to 1000 °C.

In operation (c), the hot-rolled steel sheet may be cooled to 570 to 680 °C and coiled.

A method of manufacturing a hot-rolled steel sheet according to another embodiment of the present invention includes (a) reheating a steel slab including C: 0.03 to 0.1 wt%, Si: 0.1 wt% or less, Mn: 0.8 to 1.4 wt%, Ti: 0.03 to 0.08 wt%, P: 0.02 wt% or less, S: 0.02 wt% or less, N: 0.01 wt% or less, and the balance Fe and other inevitable impurities, (b) hot-rolling the steel slab, and (c) cooling and coiling the hot-rolled steel sheet.

The method of manufacturing a hot-rolled plated steel sheet according to the present invention, which includes the above-described method of manufacturing a hot-rolled steel sheet, includes, after the coiling of the hot-rolled steel sheet, heat-treating the coiled hot-rolled steel sheet, and forming a plating layer on at least one surface of the hot-rolled steel sheet.

The heat-treating may be performed at 450 to 750 °C.

The forming of the plating layer may be performed using any one of a molten plating method, an electroplating method, and a plasma method.

### [Advantageous Effects]

According to the high-strength hot-rolled steel sheet, the high-strength hot-rolled plated steel sheet, and the method of manufacturing the same, it is possible to have high strength suitable for use as a structural material for high-strength support and reduce the finish hot rolling load.

In terms of high strength, there is an effect of exhibiting excellent yield strength, tensile strength, and elongation.

Specific effects together with the above effects are described together with a description of the following detailed matters for carrying out the invention.

### [Description of Drawings]

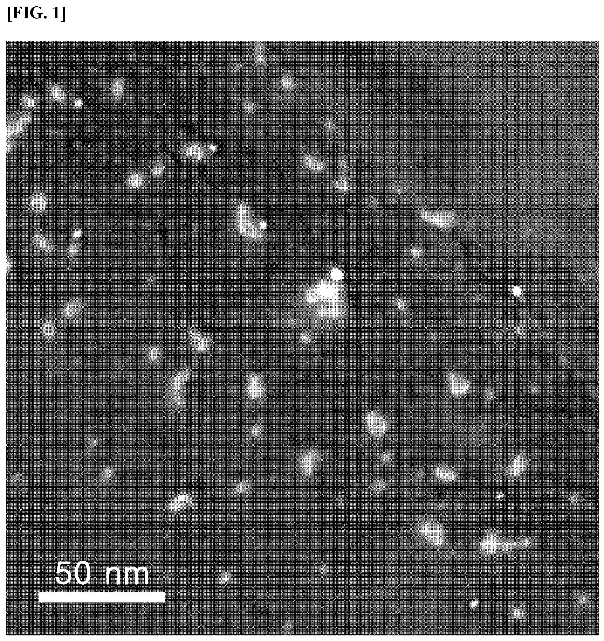

FIG. 1 is a transmission electron microscopy (TEM) image showing carbide analysis of Inventive Example 1 according to the present invention.

### [Mode for Invention]

The above-described objects, features, and advantages will be described below in detail with reference to the accompanying drawings, and thus those skilled in the art to which the present invention pertains will be able to easily carry out the technical spirit of the present invention. In describing the present invention, when it is determined that a detailed description of the known technology related to the present invention may unnecessarily obscure the gist of the present invention, a detailed description thereof will be omitted. Hereinafter, exemplary embodiments according to the present invention will be described in detail with reference to the accompanying drawings. In the drawings, the same reference numerals are used to denote the same or similar components.

Hereinafter, the arrangement of an arbitrary component on an "upper portion (or lower portion)" of a component or "above (or under)" the component may not only mean that the arbitrary component is disposed in contact with an upper surface (or a lower surface) of the component, but also mean that other components may be interposed between the component and the arbitrary component disposed above (or under) the component.

In addition, when a certain component is described as being "connected," "coupled," or "joined" to the other component, the components may be directly connected or joined, but it should be understood that another component may be "interposed" between the components, or the components may be "connected," "coupled," or "joined" through another component.

Hereinafter, a high strength hot-rolled steel sheet, a high strength hot-rolled plated steel sheet, and a method of manufacturing the same according to some embodiments of the present invention will be described.

The hot-rolled steel sheet according to the present invention may exhibit high strength suitable for use as a structural material for high-strength support, such as scaffolding for construction, a structural material for a greenhouse, and solar panel supports.

A hot-rolled steel sheet according to the present invention includes 0.03 to 0.1 wt% of C, 0.1 wt% or less of Si, 0.8 to 1.4 wt% of Mn, 0.03 to 0.08 wt% of Ti, 0.02 wt% or less of P, 0.02 wt% or less of S, 0.01 wt% or less of N, and the balance Fe and inevitable impurities, and satisfies Relational expression 1. Relational expression 1: 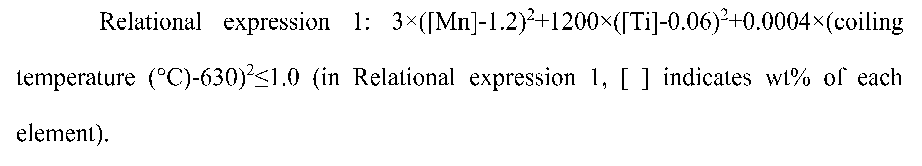 3×([Mn]-1.2)2+1200×([Ti]-0.06)2+0.0004×(coiling temperature (°C)-630)2≤1.0 (in Relational expression 1, [ ] indicates wt% of each element).

Hereinafter, a steel composition and composition ratio thereof included in a hot-rolled steel sheet with excellent strength according to the embodiment of the present invention will be described in more detail. Hereinafter, unless otherwise stated, percentages (%) indicating the content of each element are based on weight.

In a composition ratio of the present invention, 0.x0% is indicated as 0.x%, and 0.0x0% is indicated as 0.0x%.

### Carbon (C): 0.03 to 0.1 wt%

Carbon (C) is added not only for solid solution strengthening effects but also for the formation of carbides with Ti, and is an element for securing tensile strength. In order to obtain these effects, it is preferable to add at least 0.03 wt%.

However, when an amount of carbon (C) added exceeds 0.1 wt%, carbide coarsening occurs, making it impossible to sufficiently secure the precipitation strengthening effect, and the pearlite fraction in the microstructure increases, making it impossible to secure a ferrite structure with an area ratio of 90% or more as intended in the present invention. In addition, during continuous casting, surface cracks may occur due to a hypo-peritectic area, which typically has 0.07 to 0.13 wt% of carbon, and thus, it is necessary to limit the carbon content to 0.1 wt% or less to ensure the soundness of the material. In hypo-peritectic, the term "peritectic" refers to a phenomenon in which the original crystal is surrounded by other crystals.

On the other hand, when the carbon content is less than 0.03 wt%, there is a problem in which the strength is insufficient as there is less carbon to form TiC carbides.

Accordingly, carbon (C) may be added in an amount of 0.03 to 0.1 wt%, preferably 0.04 to 0.08 wt%, based on a total weight of the hot-rolled steel sheet according to the present invention. When the carbon (C) is added in an amount of 0.04 to 0.08 wt%, sufficient TiC precipitation can be induced, and the formation of cementite from the remaining carbon (C) can be further reduced, thereby further improving the elongation of the material.

### Silicon (Si): 0.1 wt% or less

Silicon (Si) is not only useful for deoxidizing steel but is also effective in securing strength through solid solution strengthening. However, when the silicon (Si) content exceeds 0.1 wt%, there is a disadvantage in that silicon oxide is formed, making plating difficult.

Accordingly, the silicon (Si) may be added in an amount of 0.1 wt% or less, preferably 0.001 to 0.1 wt%, and more preferably 0.04 to 0.09 wt%. When the silicon (Si) is added in an amount of 0.04 to 0.09 wt%, the formation of blisters on a steel surface during hot rolling can be suppressed, thereby improving surface quality.

### Manganese (Mn): 0.8 to 1.4 wt%

Manganese (Mn) is added to secure solid solution strengthening effects and hardenability of a weld zone during cooling after welding. In order to obtain these effects, manganese (Mn) may be added in an amount of 0.8 wt% or more. However, when manganese (Mn) is added in an amount of more than 1.4 wt%, the hardenability caused by Mn increases, making it difficult to obtain the desired ferrite structure of 90% or more due to the appearance of a low-temperature structure.

Accordingly, manganese (Mn) may be added in an amount of 0.8 to 1.4 wt%, preferably 1.05 to 1.35 wt%, based on the total weight of the hot-rolled steel sheet according to the present invention. When manganese (Mn) is added in an amount of 1.05 to 1.35 wt%, a sufficient solid solution strengthening effect can be achieved, and the appearance of low-temperature structures can be suppressed, thereby securing material properties.

### Titanium (Ti): 0.03 to 0.08 wt%

Titanium (Ti) is added to provide a precipitation strengthening effect and suppress grain coarsening.

When titanium (Ti) is added in an amount of less than 0.03 wt%, it is difficult to obtain the high strength targeted in the present invention, and when it is added in an amount of more than 0.08 wt%, coarse carbides are formed, making precipitation strengthening ineffective.

Accordingly, titanium (Ti) may be added in an amount of 0.03 to 0.08 wt%, preferably 0.045 to 0.075 wt%, based on the total weight of the hot-rolled steel sheet according to the present invention. When titanium (Ti) is added in an amount of 0.045 to 0.075 wt%, higher strength and elongation can be secured through the precipitation of TiC that is well distributed with smaller sizes.

### Phosphorus (P): 0.02 wt% or less

Phosphorus (P), as an impurity element, tends to segregate at grain boundaries and deteriorate toughness, and thus is preferably not included as much as possible.

Accordingly, phosphorus (P) may be limited to 0.02 wt% or less, preferably 0.018 wt% or less, based on the total weight of the hot-rolled steel sheet according to the present invention. When phosphorus (P) is added in an amount of 0.018 wt% or less, it is advantageous for securing impact properties.

### Sulfur (S): 0.02 wt% or less

Sulfur (S), as an impurity element, is a major element forming MnS, and the formation of coarse MnS can reduce toughness.

Accordingly, sulfur (S) may be limited to 0.02 wt% or less, preferably 0.01 wt% or less, based on the total weight of the hot-rolled steel sheet according to the present invention. When sulfur (S) is added in an amount of 0.01 wt% or less, it is advantageous for securing impact properties.

### Nitrogen (N): 0.01 wt% or less

Nitrogen (N), as an impurity element, reacts with Ti at high temperatures to form nitrides when the content exceeds 0.01 wt%, thereby reducing the amount of Ti effectively contributing to precipitation strengthening and thus lowering the strength of the steel sheet.

Accordingly, nitrogen (N) may be limited to 0.01 wt% or less, preferably 0.0070 wt% or less, based on the total weight of the hot-rolled steel sheet according to the present invention. When nitrogen (N) is added in an amount of 0.0070 wt% or less, the formation of coarse TiN can be further suppressed, which is advantageous for improving strength.

In addition, the high strength hot-rolled steel sheet according to the embodiment of the present invention may include the balance Fe and other inevitable impurities in addition to the above-described steel composition. The inevitable impurities may be unintentionally incorporated during the conventional steel manufacturing process and cannot be completely excluded, and those skilled in the field of typical steel manufacturing can easily understand its meaning.

For example, the inevitable impurities may include Nb and the like in an amount of 0.002 wt% or less.

In addition, the hot-rolled steel sheet with excellent strength according to the embodiment of the present invention does not completely exclude the addition of compositions other than the above-described steel composition.

The hot-rolled steel sheet of the present invention preferably satisfies Relational expression 1 below. Relational expression 1: 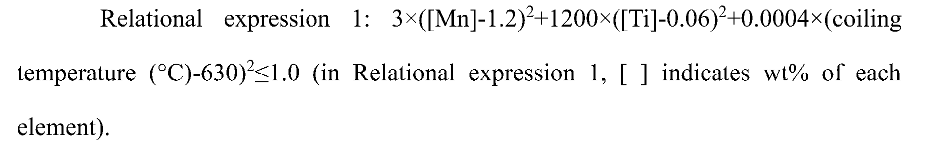 3×([Mn]-1.2)2+1200×([Ti]-0.06)2+0.0004×(coiling temperature (°C)-630)2≤1.0 (in Relational expression 1, [ ] indicates wt% of each element).

Relational expression 1 indicates that the solid solution effect of Mn, the content for TiC precipitation, and the coiling temperature are key parameters for achieving the desired high-strength steel, and excellent high-strength steel can be secured when Relational expression 1 has a value of 1 or less.

In Relational expression 1, Mn lowers the Ar3 transformation temperature, refines the size of carbides formed during phase transformation, and affects material properties through solid solution strengthening, and thus, it is necessary to limit the content thereof.

In addition, by controlling the Ti content in Relational expression 1, strength can be increased through TiC precipitation. The coiling temperature is a key factor inducing the growth of carbides formed during phase transformation and the additional precipitation of dissolved Ti.

When the value of Relational expression 1: 3×([Mn]-1.2)²+1200×([Ti]-0.06)²+0.0004×(coiling temperature-630)² exceeds 1.0, the number of precipitates is insufficient or the precipitates grow too much, resulting in inadequate material quality for the steel sheet.

Accordingly, it is preferable for the value of Relational expression 1: 3×([Mn]-1.2)²+1200×([Ti]-0.06)²+0.0004×(coiling temperature-630)² to satisfy 1.0 or less, and more preferably to satisfy 0.1 to 0.8. By satisfying the value of Relational expression 1 between 0.1 and 0.8, the rolling load can be lowered, thereby improving productivity or securing superior material quality, and material variation in length and width directions within the coil can be reduced, thereby securing the quality of the hot-rolled steel sheet.

In order to secure excellent formability, it is important that the hot-rolled steel sheet of the present invention contains at least 90 area% of ferrite, based on a total area% of 100%. In this regard, in the high strength hot-rolled steel sheet according to the embodiment of the present invention, a ferrite fraction is more preferably 91% or more, still more preferably 92% or more, and even more preferably 98% or more in terms of area fraction.

The remainder may include one or more of pearlite, bainite, and martensite.

Theoretically, the microstructure of the present invention is preferably a single phase of ferrite, but due to the manufacturing process, one or more of pearlite, bainite, and martensite may inevitably be formed. However, when low-temperature transformation phases such as bainite or martensite are excessive, formability deteriorates. In addition, when pearlite is present in the hot-rolled steel sheet, cracks are prone to occur during processing due to cementite that is a hard phase.

Accordingly, it is preferable to minimize the residual structure as much as possible.

The ferrite, which is the main structure of the present invention, may be one or more of polygonal ferrite (PF), bainitic ferrite (BF), and acicular ferrite (AF).

Polygonal ferrite is a microstructure formed by phase transformation of deformed austenite at a temperature of 700 °C or higher, and refers to ferrite having a fully polygonal shape.

Bainitic ferrite is a structure generated by displacive phase transformation, and since it is generated by shear transformation, spiral dislocations are regularly arranged within the structure to reduce the amount of shear deformation generated during transformation.

Acicular ferrite is a structure formed during the cooling or coiling process, consisting of an interior in the form of laths resembling wooden sticks. Accordingly, this structure achieves a grain size refinement effect, resulting in an excellent combination of strength and ductility. Acicular ferrite is also referred to as acicular ferrite or need-like acicular ferrite.

There are two types of bainite, which is the residual structure of the present invention: one obtained by isothermal transformation at a relatively high temperature is referred to as upper bainite, and the other generated at a low temperature is referred to as lower bainite. Upper bainite is feather-like, and lower bainite is needle-like, thin, and pointed.

Pearlite and martensite are high-hardness structures formed in areas in which C, Si, Mn, etc. are locally enriched when polygonal ferrite is formed. Since the enrichment of the above elements is unavoidable when polygonal ferrite is formed, it is not possible to completely prevent the formation of these two structures in the inventive material, but it is preferable in terms of ductility to minimize the size of local areas.

In the present invention, the average size of the ferrite grains may be 15 µm or less, preferably 13 µm or less, and more preferably 7 to 9 µm.

When the average size of the ferrite grains exceeds 15 µm, sufficient strength cannot be obtained due to grain coarsening.

One of the important methods for securing strength in the present invention is to make the size of the precipitates fine. Fine precipitates contribute to securing ductility as well as strength. In this regard, the high strength hot-rolled steel sheet according to the present invention may include (Ti, Nb) (C) precipitates. This means that the high strength hot-rolled steel sheet includes carbide precipitates including one or more of Ti and Nb. The carbides may include carbonitrides. Since nano-sized carbides among the precipitates contribute significantly to strength enhancement, it is preferable to include carbides.

The average size of the carbides present at the 1/4 point in a thickness direction from the surface of the hot-rolled steel sheet may be 8 nm or less, preferably 3 to 5 nm.

Here, the average size of the carbides is calculated as the sum of average values of major and minor axes of the carbides divided by a total number of carbides.

In addition, the number of carbides may be 4.0 or more per 10,000 nm², preferably 5.0 to 10.0, and more preferably 5.0 to 8.0.

Regarding the carbide distribution, since TEM measures at magnification, the number of carbides in the entire photographic area is counted as shown in FIG. 1, and the area is converted to 100 nm×100 nm.

For example, the total area of the photograph in FIG. 1 is 240 nm×240 nm.

In this way, by forming a large amount of fine carbides with an average size of 8 nm or less, an excellent strength enhancement effect can be obtained without the fracture of the carbides.

The high strength hot-rolled steel sheet according to the embodiment of the present invention satisfies the presented alloy composition, microstructure fraction, and Relational expression 1, thereby possessing excellent mechanical properties such as a yield strength (YS) of 450 MPa or more, a tensile strength (TS) of 540 MPa or more, and an elongation of 16% or more.

Regarding mechanical properties, the yield strength may be 450 MPa or more and may be up to 700 MPa. The tensile strength may be 540 MPa or more and may be up to 800 MPa. The elongation may be 16% or more and may be up to 40%.

As a result, the hot-rolled steel sheet according to the embodiment of the present invention is used as a high strength supporting structural material, such as for construction scaffolding, structural materials for a vinyl greenhouse, and solar panel support, which requires high strength and excellent formability.

The present invention may provide a hot-rolled plated steel sheet manufactured using the high strength hot-rolled steel sheet.

The hot-rolled plated steel sheet according to the present invention includes a base steel sheet, and a plating layer disposed on at least one surface of the base steel sheet, in which the base steel sheet includes the hot-rolled steel sheet.

The base steel sheet is not particularly limited and may be construed as a concept including all steel sheets that may be applied to the manufacturing of plated steel sheets. For example, the base steel sheet may be construed as a concept including not only cold-rolled steel sheets, hot-rolled steel sheets, and heat-treated steel sheets, but also wire rods and steel wires. Preferably, the base steel sheet may include the high strength hot-rolled steel sheet.

The plating layer may include any one of zinc, aluminum, a zinc alloy, and an aluminum alloy.

The hot-rolled plated steel sheet may exhibit high-strength properties identical to those of the hot-rolled steel sheet, such as mechanical properties including a yield strength (YS) of 450 MPa or higher, a tensile strength (TS) of 540 MPa or higher, and an elongation of 16% or higher, and are suitable for use as high-strength supporting structural materials for construction scaffolding, structural materials for a greenhouse, solar panel supports, etc.

A method of manufacturing a hot-rolled steel sheet according to the present invention includes (a) reheating a steel slab including C: 0.03 to 0.1 wt%, Si: 0.1 wt% or less, Mn: 0.8 to 1.4 wt%, Ti: 0.03 to 0.08 wt%, P: 0.02 wt% or less, S: 0.02 wt% or less, N: 0.01 wt% or less, and the balance Fe and other inevitable impurities, (b) hot-rolling the steel slab, and (c) cooling and coiling the hot-rolled steel sheet, in which the hot-rolled steel sheet satisfies Relational expression 1 below. Relational expression 1: 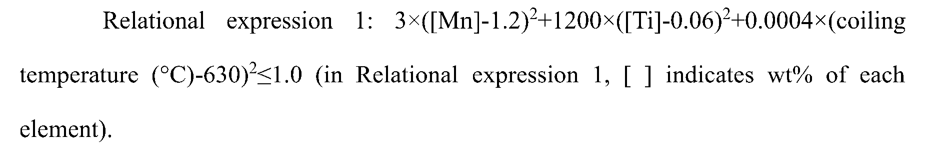 3×([Mn]-1.2)2+1200×([Ti]-0.06)2+0.0004×(coiling temperature (°C)-630)2≤1.0 (in Relational expression 1, [ ] indicates wt% of each element).

### Reheating

In the reheating, the steel slab including C: 0.03 to 0.1 wt%, Si: 0.1 wt% or less, Mn: 0.8 to 1.4 wt%, Ti: 0.03 to 0.08 wt%, P: 0.02 wt% or less, S: 0.02 wt% or less, N: 0.01 wt% or less, and the balance Fe and other unavoidable impurities may be reheated at 1,150 to 1,300 °C.

In this operation, the reheating of the steel slab within a temperature range of 1,150 to 1,300 °C is intended to homogenize the alloy composition and microstructure. When the reheating temperature is lower than 1,150 °C, precipitates formed in the steel slab remain undissolved, making it impossible to obtain a sufficient precipitation strengthening effect in subsequent processes. Conversely, when the reheating temperature exceeds 1,300 °C, excessive grain growth occurs, making it difficult to secure the target material properties and quality.

Accordingly, the reheating temperature of the steel slab may preferably range from 1,150 to 1,300 °C, more preferably 1,180 to 1,270 °C.

### Hot-rolling

In the hot-rolling, the reheated steel slab may be hot-rolled at a finish delivery temperature (FDT) of 800 to 1,000 °C.

During hot rolling, the FDT affects the fraction and grain size of the microstructure. In this operation, when the FDT is lower than 800 °C, there is a risk that some of the austenite will transform into ferrite, resulting in non-uniform grain size in the final product.

On the other hand, when the FDT exceeds 1000 °C, the grain refinement effect can be reduced due to scale defects and a decrease in the effect of controlled rolling.

Accordingly, the FDT may range from 800 to 1000 °C, preferably 850 to 950 °C.

The FDT refers to a measured value on a surface of a steel sheet at an exit side of a finishing mill.

### Cooling and coiling

In the cooling and coiling, the hot-rolled steel sheet may be cooled to 570 to 680 °C and coiled.

In this way, the hot-rolled steel sheet may be coiled at a coiling temperature of 570 to 680 °C after undergoing water cooling. When the coiling temperature is lower than 570 °C, not only can a microstructure intended by the present invention, such as the formation of low-temperature phases, not be obtained, but also sufficient precipitation strengthening effects cannot be achieved due to insufficient carbide formation.

On the other hand, when the coiling temperature exceeds 680 °C, coarsening of carbides occurs, and the target strength cannot be obtained.

Accordingly, the hot-rolled steel sheet may be coiled after cooled to 570 to 680 °C, preferably 590 to 650 °C.

The method of manufacturing a hot-rolled plated steel sheet according to the present invention, which includes the above-described method of manufacturing a hot-rolled steel sheet, includes, after the coiling, heat-treating the coiled hot-rolled steel sheet and forming a plating layer on at least one surface of the hot-rolled steel sheet.

The heat treatment process may be performed at 450 to 750 °C, preferably at 450 to 720 °C, to secure the temperature of the steel sheet and the stable formation of carbides during the subsequent plating process.

After the heat treatment process, at least one surface of the heat-treated hot-rolled steel sheet may be plated to form a plating layer. The composition and forming method of the plating layer of the present invention are not particularly limited and may be construed as including the composition and forming method of the plating layer typically provided for the hot-rolled plated steel sheet.

For example, the forming of the plating layer may be performed using any one of a molten plating method, an electroplating method, and a plasma method. The plating layer may be made of any one material selected from zinc, aluminum, a zinc-based alloy, an aluminum-based alloy, etc.

Specific embodiments regarding the high strength hot-rolled steel sheet, the high strength hot-rolled plated steel sheet, and the method of manufacturing the same will be described as follows.

### 1. Manufacturing of specimens

Steel slabs having alloy compositions listed in Table 1 below were prepared, and a hot-rolled plated steel sheet was manufactured by applying process conditions listed in Table 2 below. In Table 1, the balance is iron (Fe) and other inevitable impurities, and a hot-rolled plated steel sheet with a thickness of 1.6 mm was manufactured by applying the process conditions of Table 2.

**[Table 1] (units: wt%)**

| Items | C | Si | Mn | P | S | Ti | Nb | N |
|---|---|---|---|---|---|---|---|---|
| Inventive Example 1 | 0.04 | 0.04 | 1.06 | 0.0035 | 0.0069 | 0.053 | 0.002 | 0.0046 |
| Inventive Example 2 | 0.06 | 0.05 | 1.29 | 0.007 | 0.006 | 0.066 | 0.002 | 0.0042 |
| Inventive Example 3 | 0.04 | 0.08 | 1.31 | 0.0117 | 0.0118 | 0.067 | 0.001 | 0.0055 |
| Inventive Example 4 | 0.08 | 0.06 | 1.19 | 0.0038 | 0.0082 | 0.056 | 0.001 | 0.0032 |
| Inventive Example 5 | 0.06 | 0.09 | 1.24 | 0.0134 | 0.004 | 0.064 | 0.002 | 0.0054 |
| Inventive Example 6 | 0.04 | 0.06 | 1.26 | 0.0144 | 0.0136 | 0.054 | 0.002 | 0.0054 |
| Comparative Example 1 | 0.16 | 0.04 | 1.16 | 0.0147 | 0.0081 | 0.0002 | 0.012 | 0.0057 |
| Comparative Example 2 | 0.08 | 0.08 | 1.25 | 0.0053 | 0.0147 | 0.0001 | 0.023 | 0.004 |
| Comparative Example 3 | 0.07 | 0.03 | 1.16 | 0.0113 | 0.0036 | 0 | 0.037 | 0.0051 |
| Comparative Example 4 | 0.08 | 0.04 | 0.38 | 0.0003 | 0.0037 | 0.051 | 0.002 | 0.0048 |
| Comparative Example 5 | 0.06 | 0.06 | 1.82 | 0.0149 | 0.0092 | 0.061 | 0.001 | 0.0051 |
| Comparative Example 6 | 0.07 | 0.06 | 1.23 | 0.0105 | 0.0086 | 0.027 | 0.002 | 0.0037 |
| Comparative Example 7 | 0.09 | 0.1 | 1.23 | 0.011 | 0.008 | 0.089 | 0.001 | 0.0042 |
| Comparative Example 8 | 0.07 | 0.07 | 1.08 | 0.0066 | 0.0068 | 0.056 | 0.002 | 0.005 |
| Comparative Example 9 | 0.07 | 0.04 | 1.12 | 0.0008 | 0.007 | 0.054 | 0.001 | 0.0052 |

**[Table 2]**

| Items | Reheating temperature (°C) | Finish hot rolling entry temperature (°C) | Finish hot rolling exit-side temperature (°C) | Coiling temperature (°C) | Relative comparison of loads of upper three rolls during finish rolling (%) | Relative comparison of loads of rear three rolls during finish rolling (%) |
|---|---|---|---|---|---|---|
| Inventive Example 1 | 1216 | 1029 | 887 | 637 | 100 | 100 |
| Inventive Example 2 | 1244 | 986 | 932 | 614 | 95 | 97 |
| Inventive Example 3 | 1257 | 1053 | 889 | 621 | 101 | 99 |
| Inventive Example 4 | 1237 | 987 | 887 | 613 | 103 | 99 |
| Inventive Example 5 | 1238 | 1041 | 916 | 606 | 96 | 101 |
| Inventive Example 6 | 1193 | 1018 | 924 | 590 | 94 | 100 |
| Comparative Example 1 | 1191 | 1001 | 893 | 644 | 108 | 118 |
| Comparative Example 2 | 1248 | 1006 | 895 | 609 | 109 | 117 |
| Comparative Example 3 | 1246 | 994 | 879 | 582 | 111 | 119 |
| Comparative Example 4 | 1235 | 1054 | 883 | 581 | 101 | 98 |
| Comparative Example 5 | 1269 | 986 | 927 | 649 | 97 | 99 |
| Comparative Example 6 | 1242 | 1029 | 918 | 591 | 95 | 102 |
| Comparative Example 7 | 1201 | 995 | 937 | 591 | 93 | 101 |
| Comparative Example 8 | 1255 | 1058 | 891 | 523 | 104 | 101 |
| Comparative Example 9 | 1208 | 972 | 896 | 682 | 101 | 101 |

### 2. Physical property evaluation method and its results

Table 3 shows the results of evaluating physical properties for the specimens according to Inventive Examples 1 to 6 and Comparative Examples 1 to 9.

### 1) Microstructure measurement

The types and fractions (area (%)) of the microstructure were measured using an optical microscope (OM). In addition, an average size (µm) of ferrite grains was measured using the circular Intercept method of ASTM E 112 after imaging with a scanning electron microscope (SEM).

### 2) Measurement of average precipitate size

The average size (nm) of precipitates was measured by collecting precipitates from the specimens using the carbon replica method and using a TEM.

### 3) Tensile test

Yield strength (YS) (MPa), tensile strength (TS) (MPa), and elongation (EL) (%) were measured by conducting tensile tests according to the KS B 0802 standard. For hot-rolled steel sheets, tensile specimens were prepared using KS B 0801 No. 5 specimens, with the longitudinal direction aligned with the hot-rolling direction.

**[Table 3]**

| Items | Microstructure | | | | | | Mechanical characteristics | | | Relational expression 1 |
|---|---|---|---|---|---|---|---|---|---|---|
| | Ferrite Fraction | Pearlite Fraction | Bainite or Martensite | Average ferrite grain size | Average carbide size | Number of carbides per 10,000 nm² | Yield strength | Tensile Strength | Elongation | |
| Inventive Example 1 | 99.0 | 1.0 | 0 | 8.6 | 5 | 6.2 | 523 | 648 | 26.2 | 0.14 |
| Inventive Example 2 | 98.5 | 1.5 | 0 | 7.9 | 3.9 | 6.3 | 524 | 609 | 22.2 | 0.17 |
| Inventive Example 3 | 99.0 | 1.0 | 0 | 8.8 | 4.2 | 6.3 | 514 | 620 | 21.3 | 0.13 |
| Inventive Example 4 | 98.1 | 1.9 | 0 | 8.5 | 3.7 | 6.1 | 508 | 609 | 20.3 | 0.14 |
| Inventive Example 5 | 98.5 | 1.5 | 0 | 9 | 4.2 | 6.4 | 503 | 625 | 20.2 | 0.25 |
| Inventive Example 6 | 99.0 | 1.0 | 0 | 9 | 3.5 | 6.0 | 501 | 600 | 26.3 | 0.69 |
| Comparative Example 1 | 96.1 | 3.9 | 0 | 6.8 | 4.5 | 1.0 | 497 | 624 | 26.3 | 4.37 |
| Comparative Example 2 | 98.1 | 1.9 | 0 | 6.4 | 5.1 | 2.0 | 492 | 638 | 25.7 | 4.49 |
| Comparative Example 3 | 98.3 | 1.7 | 0 | 6.9 | 4.2 | 3.2 | 489 | 649 | 27.4 | 5.25 |
| Comparative Example 4 | 98.1 | 1.9 | 0 | 9.1 | 6.3 | 2.3 | 422 | 552 | 26.3 | 3.07 |
| Comparative Example 5 | 84.9 | 1.5 | 13.6 | 9.2 | 4.7 | 6.3 | 562 | 663 | 15.6 | 1.30 |
| Comparative Example 6 | 98.3 | 1.7 | 0 | 7.7 | 3.8 | 3.0 | 395 | 493 | 28.3 | 1.92 |
| Comparative Example 7 | 97.8 | 2.2 | 0 | 7.7 | 5.9 | 4.1 | 580 | 674 | 15.3 | 1.62 |
| Comparative Example 8 | 86.0 | 1.7 | 12.3 | 8.9 | 4.7 | 3.3 | 442 | 648 | 15.8 | 4.64 |
| Comparative Example 9 | 98.5 | 1.5 | 0 | 13.4 | 10.6 | 1.2 | 367 | 453 | 31.8 | 4.73 |

As shown in Tables 1 to 3, in the case of Inventive Examples 1 to 6 satisfying the alloy composition, Relational Expression 1, and process conditions proposed by the present invention, it can be confirmed that high mechanical properties are obtained due to securing the microstructure and precipitates intended by the present invention, and a low finish rolling load ratio of 100% or less is exhibited.

FIG. 1 is a TEM image showing carbide analysis of Inventive Example 1 according to the present invention.

As shown in FIG. 1, numerous carbides with a thickness of 10 nm or less were observed, and most of these carbides were observed to be isolated TiC.

On the other hand, Comparative Example 1 exceeded the C content, and in the case of Comparative Examples 1 to 3, by adding Nb in an amount of 0.01 to 0.03 wt% instead of Ti, excellent mechanical properties were exhibited due to grain refinement and strengthening by NbC precipitation.

However, in Comparative Examples 1 to 3, the finish rolling load increased to 100% or more during hot finish rolling because the increase in the unrecrystallized area temperature due to the Nb component increased the material's resistance to high-temperature deformation.

In addition, in the case of Comparative Example 4, due to a low Mn content, the solid solution strengthening effect was insufficient, and sufficient precipitation strengthening could not be obtained due to changes in phase transformation conditions during cooling, thereby failing to secure the high strength targeted by the present invention.

In the case of Comparative Example 5, as the Mn content increased, hardenability increased, and although strength was significantly increased due to the formation of low-temperature phases, elongation did not exceed 16%

In addition, Comparative Examples 6 and 7 deviated from the Ti content range.

In the case of Comparative Example 6, when the Ti content was low, precipitation did not sufficiently occur, resulting in insufficient strength. In the case of Comparative Example 7, when the Ti content was high, excessive precipitation strengthening due to TiC occurred, resulting in increased strength, but elongation did not exceed 16%.

In the case of Comparative Example 8, since the coiling temperature was lower than the specified range, precipitation did not sufficiently occur and a low-temperature microstructure did appear, resulting in low yield strength and insufficient elongation.

In the case of Comparative Example 9, since the coiling temperature was higher than the specified range, excessive growth of precipitates occurred, resulting in insufficient strength. In addition, Comparative Example 9 showed that the average carbide size exceeded 8 nm and the number of carbides per 10,000 nm² was less than 4, resulting in significantly low yield strength and tensile strength.

In addition, as shown in Table 3, it can be confirmed that Comparative Examples 1 to 9 did not satisfy [Relational Expression 1]≤1.

Regarding the finish rolling load in Table 2, in general, as the FDT decreases, rolling is performed in a non-recrystallization area (the Tnr temperature or lower), thereby forming deformed γ, and α nucleation occurs actively in pancake-shaped deformed bands during cooling, resulting in a refined final grain size.

Nb extends the non-recrystallization area (i.e., increases the Tnr), thereby enabling rolling in the non-recrystallization area even at higher temperatures, refining the grain size compared to general C-Si steel, and securing high strength through partial NbC precipitation.

However, in Comparative Examples 1 to 3 containing 0.01 wt% or more of Nb, recrystallization does not occur during finishing mill (FM) rolling, and thus the rolling load remains high.

On the other hand, in the inventive Ti steels (Inventive Examples 1 to 6), recrystallization of the material occurs during finish hot rolling, thereby reducing the rolling load, and this effect becomes more pronounced toward the latter stage of finish rolling.

Table 4 shows mechanical property results of hot-dip plated steel sheets obtained by coating molten zinc on the hot-rolled steel sheets according to Tables 1 and 2.

**[Table 4]**

| Items | Mechanical characteristics | | |
|---|---|---|---|
| | Yield strength | Tensile strength | Elongation |
| Inventive Example 1-1 | 574 | 670 | 24.4 |
| Inventive Example 2-1 | 563 | 629 | 23.9 |
| Inventive Example 3-1 | 568 | 657 | 21.2 |
| Inventive Example 4-1 | 546 | 641 | 21.6 |
| Inventive Example 5-1 | 562 | 655 | 19.6 |
| Inventive Example 6-1 | 551 | 629 | 28.3 |
| Comparative Example 1-1 | 526 | 655 | 27.4 |
| Comparative Example 2-1 | 523 | 659 | 24.8 |
| Comparative Example 3-1 | 539 | 686 | 26.1 |
| Comparative Example 4-1 | 447 | 573 | 24.5 |
| Comparative Example 5-1 | 604 | 705 | 14.3 |
| Comparative Example 6-1 | 415 | 507 | 27.7 |
| Comparative Example 7-1 | 619 | 687 | 14.9 |
| Comparative Example 8-1 | 490 | 658 | 14.6 |
| Comparative Example 9-1 | 399 | 472 | 29.8 |

Except for the mechanical properties in Table 4, the remaining items show the same values as those in Table 3.

Compared to the hot-rolled steel sheets in Table 3, the yield strength and tensile strength of the hot-dip plated steel sheets are slightly increased, and elongation is similar.

Although the present invention has been described above with reference to the exemplary drawings, the present invention is not limited by the embodiments and drawings disclosed in the specification, and it is apparent that various modifications can be made by those skilled in the art within the scope of the technical spirit of the present invention. In addition, even when the operational effects according to the configuration of the present invention have not been explicitly described in the description of the embodiments of the present invention, it goes without saying that the effects predictable by the corresponding configuration should be recognized.

## Claims

1. A hot-rolled steel sheet comprising: 0.03 to 0.1 wt% of C; 0.1 wt% or less of Si; 0.8 to 1.4 wt% of Mn; 0.03 to 0.08 wt% of Ti; 0.02 wt% or less of P; 0.02 wt% or less of S; 0.01 wt% or less of N; and the balance Fe and inevitable impurities, and satisfying Relational expression 1 below: Relational expression 1: 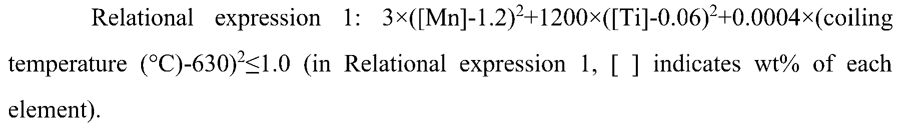 3×([Mn]-1.2)2+1200×([Ti]-0.06)2+0.0004×(coiling temperature (°C)-630)2≤1.0 (in Relational expression 1, [ ] indicates wt% of each element).

2. The hot-rolled steel sheet of claim 1, comprising 90% or more of ferrite and the balance of one or more of pearlite, bainite, and martensite, based on a total area of 100%.

3. The hot-rolled steel sheet of claim 2, wherein an average grain size of ferrite grains is 15 µm or less.

4. The hot-rolled steel sheet of claim 1, comprising carbide,
wherein an average size of the carbides is 8 nm or less, and the number of carbides is 4.0 or more per 10,000 nm².

5. The hot-rolled steel sheet of claim 1, wherein a yield strength is 450 MPa or more, a tensile strength is 540 MPa or more, and an elongation is 16% or more.

6. A hot-rolled plated steel sheet comprising: a base steel sheet; and a plating layer disposed on at least one surface of the base steel plate,
wherein the base steel plate includes the hot-rolled steel plate of Claim 1.

7. The hot-rolled plated steel sheet of claim 6, wherein the plating layer includes any one of zinc, aluminum, a zinc alloy, and an aluminum alloy.

8. A method of manufacturing a hot-rolled steel sheet, comprising:
(a) reheating a steel slab including C: 0.03 to 0.1 wt%, Si: 0.1 wt% or less, Mn: 0.8 to 1.4 wt%, Ti: 0.03 to 0.08 wt%, P: 0.02 wt% or less, S: 0.02 wt% or less, N: 0.01 wt% or less, and the balance Fe and inevitable impurities;
(b) hot-rolling the steel slab; and
(c) cooling and coiling the hot-rolled steel sheet,
wherein the hot-rolled steel sheet satisfies Relational expression 1 below: Relational expression 1: 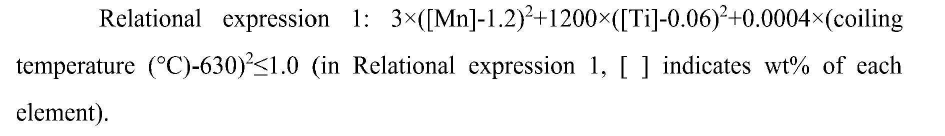 3×([Mn]-1.2)2+1200×([Ti]-0.06)2+0.0004×(coiling temperature (°C)-630)2≤1.0 (in Relational expression 1, [ ] indicates wt% of each element).

9. The method of claim 8, wherein, in operation (a), the steel slab is reheated at 1150 to 1300 °C.

10. The method of claim 8, wherein, in operation (b), the steel slab is hot-rolled at a finish delivery temperature of 800 to 1000 °C.

11. The method of claim 8, wherein, in operation (c), the hot-rolled steel sheet is cooled to 570 to 680 °C and coiled.

12. A method of manufacturing a hot-rolled plated steel sheet, which includes the method of manufacturing a hot-rolled steel sheet of Claim 8, the method comprising:
heat-treating the coiled hot-rolled steel sheet after the coiling; and
forming a plating layer on at least one surface of the hot-rolled steel sheet.

13. The method of claim 12, wherein the heat-treating is performed at 450 to 750 °C.

14. The method of claim 12, wherein the forming of the plating layer is performed using any one of a molten plating method, an electroplating method, and a plasma method.
